# EUROPEAN PATENT SPECIFICATION

(11) **EP 3 749 103 B1**
(45) Date of publication and mention of the grant of the patent: **11.08.2021**
(21) Application number: 18833059.1
(22) Date of filing: 21.12.2018
(51) Int. Cl.: A23F 3/14, A23F 3/40, A23F 3/42, A23L 27/20, A23F 3/36

(54) **DECAFFEINATED BEVERAGE PRECURSOR**
ENTKOFFEINIERTES GETRÄNKEVORPRODUKT
PRÉCURSEUR DE BOISSONS DÉCAFÉINÉES

(30) Priority: 08.02.2018 EP 18155808
(43) Date of publication of application: 16.12.2020
(73) Proprietor: Unilever PLC, London Greater London EC4Y 0DY (GB); Unilever IP Holdings B.V., 3013 AL Rotterdam (NL)
(72) Inventor: CLIFFORD, Ryan, Michael, Bedford, Bedfordshire MK44 1LQ (GB); MAINA, Joyce, Wambui, Bedford, Bedfordshire MK44 1LQ (GB)
(74) Representative: Warner, Guy Jonathan
(86) International application number: PCT/EP2018/086786
(87) International publication number: WO 2019/154554

(56) References cited:
- WO-A1-98/23164
- WO-A1-2007/079900
- WO-A1-2011/069832
- US-A- 3 966 986
- US-A- 5 087 468
- US-A1- 2005 048 186

## Description

### Field of the invention

The present application relates to a decaffeinated beverage precursor, and more particularly to such a precursor with desirable sensory attributes.

### Background of the invention

Some consumers choose not to drink caffeinated beverages such as tea and coffee since they are conscious of their intake of caffeine. Other consumers drink decaffeinated beverages. However, such decaffeinated products tend to have flavour and aroma characteristics that are inferior to beverages having their natural level of alkaloids.

As discussed in Chapter 18 of "Tea: Cultivation to consumption" (edited by K.C. Wilson & M.N. Clifford, published in 1992), many volatile compounds, collectively known as the aroma complex, have been detected in tea. The composition of the aroma complex is known to vary due to agronomic, cultural and manufacturing practices. The volatile compounds in tea can broadly be classified into primary or secondary products. Primary products are biosynthesised by the plant and are present in fresh green leaf, whilst secondary products are produced during tea manufacture via enzymic, redox or pyrolytic reactions.

Tea beverages are commonly classified according to their mode of manufacture, for example into green teas (which are neither withered nor fermented), several types of partially fermented teas and both orthodox and CTC black teas. The mode of manufacture has a strong influence on the aroma complex of the tea, since many of the aroma compounds are secondary products formed during processing. For example, steaming (which is often the first step in green tea manufacture) deactivates not only the enzymes responsible for fermentation, but also the majority of the enzymes responsible for changes in the aroma complex. On the other hand, the precursors of most of the aroma compounds increase during withering (which is a typical step in the manufacture of partially fermented tea and black tea) and aroma compounds increase during fermentation. Indeed, green teas normally have lower levels of aroma compounds than oolong or black teas due to the absence of withering and/or fermentation in their processing.

The loss of aroma during decaffeination of leaf tea is a recognised problem. Attempts to solve this problem have focused on collecting an aroma fraction during the decaffeination process so that this fraction can be re-added to the decaffeinated tea material. For example, both US 5,087,468 and GB 1,333,362 disclose recovering tea aroma during supercritical carbon dioxide decaffeination, and re-adding the recovered aroma to the decaffeinated tea. This approach has met with limited success, and consumers still perceive decaffeinated tea products as being inferior to normal (caffeinated) tea products. WO2007/079900 describes aroma for green tea.

Thus, there remains an unmet consumer need to provide decaffeinated beverage precursors with desirable sensory attributes.

### Summary of the invention

Surprisingly, we have found that adding a specific aroma composition to decaffeinated black leaf tea provides a beverage precursor which, when used to produce a tea beverage, enhances the overall organoleptic experience for the consumer. Thus in a first aspect, the invention relates to a beverage precursor comprising leaf tea and a tea aroma composition, wherein the leaf tea is decaffeinated black leaf tea and the aroma composition comprises E-2-hexenal and linalool in a weight ratio of at least 0.7:1.

In a second aspect, the invention relates to a method for producing the beverage precursor of the first aspect, wherein the method comprises mixing decaffeinated black leaf tea and an aroma composition, wherein the aroma composition comprises E-2-hexenal and linalool in a weight ratio of at least 0.7:1.

### Detailed description

The beverage precursor of the present invention comprises leaf tea and is in a form suitable for directly preparing a beverage, e.g. by contacting the beverage precursor with an aqueous medium such as water, preferably boiling water.

For the purpose of the present invention, "tea" means material from *Camellia sinensis* var. *sinensis* and/or *Camellia sinensis* var. *assamica.* The term "leaf tea" refers to leaf and/or stem material from the tea plant. Leaf tea is dried to a moisture content of less than 5 wt.%, and the moisture content of the leaf tea will not usually be below 0.1 wt.%. Typically the leaf tea has a moisture content of 1 to 5 wt.%. In other words, the term "leaf tea" refers to the end product of tea manufacture (which is sometimes referred to as "made tea").

The beverage precursor of the present invention comprises black leaf tea. As used herein, the term "black tea" refers to substantially fermented tea, wherein "fermentation" refers to the oxidative and hydrolytic process that tea undergoes when certain endogenous enzymes and substrates are brought together. During the so-called fermentation process, colourless catechins in the leaves and/or stem are converted to a complex mixture of yellow/orange to dark brown polyphenolic substances. For example, black leaf tea can be manufactured from fresh tea material by the steps of: withering, maceration, fermentation and drying. A more detailed description of the production of black tea can be found in Chapter 14 of "Tea: Cultivation to consumption" (edited by K.C. Wilson & M.N. Clifford, published in 1992).

The beverage precursor comprises decaffeinated tea. The term "decaffeinated tea" refers to leaf tea which comprises caffeine in an amount of less than 0.2% by weight, preferably less than 0.15% by weight, more preferably less than 0.1% by weight. Decaffeinated leaf tea is commercially available. Decaffeinated leaf tea can be obtained by any suitable process, for example by using a solvent which selectively extracts caffeine from the leaf tea. Three solvents are commonly used to decaffeinate leaf tea: methylene chloride, ethyl acetate, and supercritical carbon dioxide. A process involving one of these solvents is preferably used to decaffeinate the leaf tea used in the beverage precursor of this invention. In other words, the decaffeinated black leaf tea is preferably obtained by selectively extracting caffeine from black leaf tea using a solvent selected from the group consisting of: methylene chloride, ethyl acetate, and supercritical carbon dioxide.

The beverage precursor of the present invention comprises an aroma composition, more particularly an aroma composition comprises E-2-hexenal and linalool in a weight ratio of at least 0.7:1. The aroma composition can be a natural aroma composition or a synthetic aroma composition. In certain embodiments, a natural aroma composition recovered from substantially unfermented tea leaf that has been withered is preferred.

We have found that the aroma compositions described in WO 2007/079900 are suitable for use in the present invention. Synthetic mimics of these aroma compositions are also suitable and are sometimes preferred since their constituents are less variable than those of the natural aroma compositions. The aroma composition preferably comprises a relatively high proportion of E-2-hexenal. The E-2-hexenal to linalool weight ratio is at least 0.7:1, more preferably at least 0.8:1, still more preferably at least 0.9:1. The weight ratio of E-2-hexenal to linalool is preferably less than 10:1, more preferably less than 5:1, still more preferably less than 3:1.

The aroma composition preferably comprises linalool in an amount of at least 1000 ppm, more preferably at least 1500 ppm, and still more preferably at least 2000 ppm. Although there is no upper limit to the amount of linalool comprised in the aroma composition, for economic reasons it preferably comprises no more than 8000 ppm linalool, more preferably no more than 7500 ppm, and most preferably no more than 7000 ppm. Additionally or alternatively, the aroma composition preferably comprises E-2-hexenal in an amount of at least 1000 ppm, more preferably at least 2000 ppm, and still more preferably at least 3000 ppm. The aroma composition preferably comprises no more than 10000 ppm E-2-hexenal, more preferably no more than 9000 ppm, and most preferably no more than 8000 ppm.

The aroma composition preferably comprises additional aroma compounds. Non-limiting examples of such compounds include: geraniol, phenylacetaldehyde, benzyl acetate, methyl jasmonate, *cis*-jasmone, nerolidol, linalool oxides and β-damascenone.

Where aroma composition is a natural aroma composition, it is particularly preferred that it is recovered from substantially unfermented leaf that has not been heat-treated in order to arrest and/or prevent fermentation. This is because the high temperatures required in such heat treatments may drive off some of the aroma and/or cause chemical changes to the aroma. Although not essential, it is preferred that the substantially unfermented leaf is withered prior to the recovery of the aroma composition, since this treatment is believed to reduce and/or eliminate unwanted green notes.

The beverage precursor is preferably packaged, for example in an infusion packet (e.g. a tea bag) and/or an envelope. It is particularly preferred that the beverage precursor is packaged in a tea bag, and each tea bag is individually packaged in an envelope. For example, each tea bag may be packaged in a paper envelope or an air tight envelope such as a plastic envelope or a foil bag.

The beverage precursor of the present invention can be produced in any convenient manner. It is produced by a method which comprises mixing decaffeinated black leaf tea and an aroma composition, wherein the aroma composition comprises E-2-hexenal and linalool in a weight ratio of at least 0.7:1.

The method preferably comprises the subsequent and additional step of packaging the beverage precursor in an infusion packet.

As used herein the term "comprising" encompasses the terms "consisting essentially of" and "consisting of". All percentages and ratios contained herein are calculated by weight unless otherwise indicated. It should be noted that in specifying any range of values or amounts, any particular upper value or amount can be associated with any particular lower value or amount. The various features of the embodiments of the present invention referred to in individual sections above apply, as appropriate, to other sections *mutatis mutandis.* Consequently features specified in one section may be combined with features specified in other sections as appropriate. The disclosure of the invention as found herein is to be considered to cover all embodiments as found in the claims as being multiply dependent upon each other. Unless defined otherwise, all technical and scientific terms used herein have the same meaning as commonly understood by one of ordinary skill in the art in the field of tea processing.

### Examples

The present invention will now be illustrated by reference to the following examples.

### Example 1

This example describes the production of a beverage precursor according to the present invention.

A beverage precursor was prepared by combining 0.65 wt.% aroma granules with decaffeinated black leaf tea. The aroma granules consisted of a synthetic mimic of the aroma composition given in Table 1 on a maltodextrin carrier (obtained from Firmenich). The beverage precursor (2.9 g) was packaged in a tea bag.

**Table 1**

| Compound | Concentration (ppm) |
|---|---|
| methanol | 12900 |
| E-2-hexenal | 6280 |
| linalool | 3170 |
| Z-3-hexenol | 1070 |
| trans-linalool oxide | 973 |
| methyl salicylate | 833 |
| hexanal | 509 |
| E-2-hexenol | 492 |
| acetaldehyde | 365 |
| Z-2-penten-1-ol | 344 |
| cis-linalool oxide | 339 |
| 1-penten-3-ol | 251 |
| hexan-1-ol | 153 |
| 1-penten-3-one | 107 |

### Example 2

This Example examines the sensorial attributes of beverages made using the beverage precursor of Example 1.

Eight samples were analysed by a trained sensory panel. All samples were brewed using a single tea bag in 200 ml boiling water for 2 minutes under static conditions. After brewing, the tea bag was removed and 20 ml of milk was added to each sample.

A fully randomised design was adopted such that each panellist assessed each sample three times. The samples were served to the panellists in white mugs, and assessed under white light. Water, crackers and melon were provided as palate cleansers.

Sample A was prepared using the beverage precursor of Example 1, and Samples B to H were prepared using commercially available tea bags containing decaffeinated black leaf tea. Sample B (prepared using a PG Tips decaf pyramid tea bag) was used as the control sample.

Sample A was found to have significantly higher flowery and fresh green notes and lower woody notes than all of Samples B to H. In addition, Sample A was perceived to have the highest overall intensity - both in terms of smell and taste.

The results indicate that a beverage precursor according to the present invention provides beverages which have improved sensorial properties either in terms of increased floral notes and/or increased overall intensity.

## Claims

1. A beverage precursor comprising leaf tea and an aroma composition, wherein the leaf tea is decaffeinated black leaf tea and the aroma composition comprises E-2-hexenal and linalool in a weight ratio of at least 0.7:1.

2. A beverage precursor as claimed in claim 1 wherein the weight ratio of E-2-hexenal to linalool is from 0.8:1 to 10:1, preferably 0.9:1 to 5:1.

3. A beverage precursor as claimed in claim 1 or claim 2 wherein the aroma composition comprises linalool in an amount of at least 1000 ppm, preferably 2000 to 8000 ppm.

4. A beverage precursor as claimed in any one of claims 1 to 4 wherein the aroma composition comprises E-2-hexenal in an amount of at least 1000 ppm, preferably 3000 to 10000 ppm.

5. A beverage precursor as claimed in any one of claims 1 to 4 wherein the beverage precursor is packaged in an infusion packet.

6. A beverage precursor as claimed in any one of claims 1 to 5 wherein the aroma composition is a natural aroma composition, preferably a natural aroma composition recovered from substantially unfermented fresh leaf tea that has been withered.

7. A beverage precursor as claimed in any one of claims 1 to 5 wherein the aroma composition is a synthetic aroma composition.

8. A method for producing a beverage precursor as claimed in any one of claims 1 to 7 wherein the method comprises mixing decaffeinated black leaf tea and an aroma composition, the aroma composition comprises E-2-hexenal and linalool in a weight ratio of at least 0.7:1.

9. A method as claimed in claim 8 wherein the decaffeinated black leaf tea is obtained by selectively extracting caffeine from black leaf tea using a solvent selected from the group consisting of: methylene chloride, ethyl acetate, and supercritical carbon dioxide.

10. A method as claimed in claim 8 wherein the method comprises the subsequent and additional step of packaging the beverage precursor in an infusion packet.

## Patentansprüche

1. Getränkevorstufe, umfassend Blatttee und eine Aromazusammensetzung, wobei der Blatttee entkoffeinierter schwarzer Blatttee ist und die Aromazusammensetzung E-2-Hexenal und Linalool in einem Gewichtsverhältnis von mindestens 0,7:1, umfasst.

2. Getränkevorstufe wie in Anspruch 1 beansprucht, wobei das Gewichtsverhältnis von E-2-Hexenal zu Linalool 0,8:1 bis 10:1, bevorzugt 0,9:1 bis 5:1, beträgt.

3. Getränkevorstufe wie in Anspruch 1 oder Anspruch 2 beansprucht, wobei die Aromazusammensetzung Linalool in einer Menge von mindestens 1000 ppm, bevorzugt 2000 bis 8000 ppm, umfasst.

4. Getränkevorstufe wie in einem der Ansprüche 1 bis 4 beansprucht, wobei die Aromazusammensetzung E-2-Hexenal in einer Menge von mindestens 1000 ppm, bevorzugt 3000 bis 10000 ppm, umfasst.

5. Getränkevorstufe wie in einem der Ansprüche 1 bis 4 beansprucht, wobei die Getränkevorstufe in einem Aufgusspäckchen verpackt ist.

6. Getränkevorstufe wie in einem der Ansprüche 1 bis 5 beansprucht, wobei die Aromazusammensetzung eine natürliche Aromazusammensetzung ist, bevorzugt eine natürliche Aromazusammensetzung, die aus im Wesentlichen nicht fermentiertem frischem Blatttee gewonnen wurde, der verwelkt wurde.

7. Getränkevorstufe wie in einem der Ansprüche 1 bis 5 beansprucht, wobei die Aromazusammensetzung eine synthetische Aromazusammensetzung ist.

8. Verfahren zur Herstellung einer Getränkevorstufe wie in einem der Ansprüche 1 bis 7 beansprucht, wobei das Verfahren das Mischen von entkoffeiniertem schwarzem Blatttee und einer Aromazusammensetzung umfasst, wobei die Aromazusammensetzung E-2-Hexenal und Linalool in einem Gewichtsverhältnis von mindestens 0,7:1 umfasst.

9. Verfahren wie in Anspruch 8 beansprucht, wobei der entkoffeinierte schwarze Blatttee durch selektives Extrahieren von Koffein aus schwarzem Blatttee unter Verwendung eines Lösungsmittels erhalten wird, das ausgewählt ist aus der Gruppe bestehend aus: Methylenchlorid, Ethylacetat und überkritischem Kohlendioxid.

10. Verfahren wie in Anspruch 8 beansprucht, wobei das Verfahren den nachfolgenden und zusätzlichen Schritt des Verpackens der Getränkevorstufe in einem Aufgusspäckchen umfasst.

## Revendications

1. Précurseur de boisson comprenant du thé en feuille et une composition d'arôme, dans lequel le thé en feuille est du thé en feuille noir décaféiné et la composition d'arôme comprend du E-2-hexénal et du linalool dans un rapport massique d'au moins 0,7:1.

2. Précurseur de boisson selon la revendication 1, dans lequel le rapport massique de E-2-hexénal à linalool est de 0,8:1 à 10:1, de préférence 0,9:1 à 5:1.

3. Précurseur de boisson selon la revendication 1 ou revendication 2, dans lequel la composition d'arôme comprend du linalool dans une quantité d'au moins 1 000 ppm, de préférence 2 000 à 8 000 ppm.

4. Précurseur de boisson selon l'une quelconque des revendications 1 à 4, dans lequel la composition d'arôme comprend du E-2-hexénal dans une quantité d'au moins 1 000 ppm, de préférence 3 000 à 10 000 ppm.

5. Précurseur de boisson selon l'une quelconque des revendications 1 à 4, dans lequel le précurseur de boisson est emballé dans un sachet d'infusion.

6. Précurseur de boisson selon l'une quelconque des revendications 1 à 5, dans lequel la composition d'arôme est une composition d'arôme naturel, de préférence une composition d'arôme naturel récupérée à partir de thé en feuille fraîche substantiellement non fermentée qui a été flétrie.

7. Précurseur de boisson selon l'une quelconque des revendications 1 à 5, dans lequel la composition d'arôme est une composition d'arôme synthétique.

8. Procédé de production d'un précurseur de boisson selon l'une quelconque des revendications 1 à 7, dans lequel le procédé comprend le mélange de thé en feuille noir décaféiné et d'une composition d'arôme, la composition d'arôme comprend du E-2-hexénal et du linalool dans un rapport massique d'au moins 0,7:1.

9. Procédé selon la revendication 8, dans lequel le thé en feuille noir décaféiné est obtenu par extraction sélective de caféine à partir de thé en feuille noir en utilisant un solvant choisi dans le groupe consistant en : chlorure de méthylène, acétate d'éthyle, et dioxyde de carbone supercritique.

10. Procédé selon la revendication 8, dans lequel le procédé comprend l'étape subséquente et supplémentaire d'emballage du précurseur de boisson dans un sachet d'infusion.
